# EUROPEAN PATENT APPLICATION

(11) **EP 4 653 220 A1**
(43) Date of publication of application: **26.11.2025**
(21) Application number: 24177310.0
(22) Date of filing: 22.05.2024
(51) Int. Cl.: B60K 11/04

(54) **A COOLING SYSTEM**

(71) Applicant: VOLVO TRUCK CORPORATION, 405 08 Göteborg (SE)
(72) Inventor: Moussa, Omar, 418 71 Göteborg (SE); Jemt, Katarina, 416 56 Göteborg (SE)
(74) Representative: Valea AB

(57) **Abstract**

The present disclosure relates to a cooling system (100) and a method for controlling thereof. The cooling system (100) comprises:
- a water storage (120) for storing water,
- a cooling circuit (151) adapted to circulate a coolant, said cooling circuit (151) comprising a heat exchanger (150) adapted to receive a flow of air (160) during use, and
- a water spraying arrangement (140) configured to spray atomized water into air (160) upstream a first surface (152) of the heat exchanger (150),
- wherein the water spraying arrangement (140) comprises a water atomization device (141) comprising at least one nozzle (142, 142a, 142b) through which water is mixed with pressurized air, such that the water is atomized to micro-sized droplets that form a dry fog and sprayed in a spray plume (143) from said nozzle (142, 142a, 142b), ,
- wherein the water spraying arrangement (140) is adapted to assume each one of a set of spray configurations.

## Description

### TECHNICAL FIELD

The disclosure relates generally to cooling technology. In particular aspects, the disclosure relates to a cooling system utilizing evaporative cooling technology. The disclosure also relates to a fuel cell cooling system, a fuel cell system and a vehicle. Moreover, the disclosure relates to a computer-implemented method for operating the cooling system, a computer program, and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Evaporative cooling is a known solution which utilizes water evaporation to enhance cooling effects. Various evaporative cooling concepts have been developed in recent years. One of the concepts involves using high-pressure nozzles to inject water sprays into a heat exchanger's surface to achieve the cooling effect. However, this method may cause a potential risk of corrosion on the heat exchanger's surface due to water accumulation. Moreover, the accumulated water may mix with particles contained in the air which may result in clogging of the heat exchanger. Furthermore, it may be difficult to achieve a good water distribution over the heat exchanger's surface which may impact the efficiency of the evaporation process. As such, there is still a strive to develop improved technology relating to evaporative cooling.

### SUMMARY

According to a first aspect of the disclosure, a cooling system according to claim 1 is provided. The cooling system comprises:
- a water storage for storing water,
- a cooling circuit adapted to circulate a coolant, the cooling circuit comprising a heat exchanger adapted to receive a flow of air during use, and
- a water spraying arrangement in fluid communication with the water storage and configured to spray atomized water into air upstream a first surface of the heat exchanger, as seen in an intended direction of the flow of air received by the heat exchanger during use,
- wherein the water spraying arrangement comprises a water atomization device comprising at least one nozzle through which water is mixed with pressurized air, such that the water is atomized to micro-sized droplets that form a dry fog and sprayed in a spray plume from the nozzle, the spray plume having a main spray extension direction,
- wherein the water spraying arrangement is adapted to assume each one of a set of spray configurations, the set of spray configurations comprising at least two spray configurations, wherein a spray configuration parameter of each spray configuration in the set of spray configurations is different from the corresponding spray configuration parameter of each other spray configuration in the set of spray configurations, the spray configuration parameter being indicative of at least one of the following:
   ∘ an angle between the main spray extension direction and the intended direction of the flow of air received by the heat exchanger during use, and
   ∘ a distance between the at least one nozzle and the first surface of the heat exchanger along the intended direction of the flow of air received by the heat exchanger during use.

The first aspect of the disclosure may seek to reduce the potential risk of corrosion on the heat exchanger's surface. A technical benefit may include an improved cooling system with enhanced service life. The technical benefit is achieved by introducing the water spraying arrangement, which comprises at least one nozzle that can create a dry fog and spray the fog into the air upstream of the heat exchanger. Herein, the dry fog may be understood as fine droplets which particles are so small that they may prevent wetting of the heat exchanger's surface. Unlike water droplets with large sizes, which may burst upon contact with a heat exchanger's surface, potentially causing wetting and subsequent oxidation or corrosion concerns, these dry fog droplets may exhibit a bouncing behavior upon interaction with surfaces, e.g., bounce off from the surfaces, thanks to high interface tension of these dry fog droplets, leading to a lower risk of surface corrosion of the heat exchanger. Moreover, such dry fog droplets are generally faster in evaporating in the air, meaning less water may bounce onto the heat exchanger, which may also lead to a lower risk of surface corrosion of the heat exchanger. Moreover, by spraying the droplets into the air instead of the surface of the heat exchanger, it may allow sufficient time for the droplets to evaporate in the air before reaching the surface of the heat exchanger. This may not only further reduce the risk of surface corrosion of the heat exchanger but may also potentially enhance the cooling efficiency since the temperature of the air reaching the heat exchanger may be reduced. Another technical benefit may include improved cooling efficiency.

Optionally in some examples, including in at least one preferred example, diameter of the micro-sized droplets is less than 10 microns.

Optionally in some examples, including in at least one preferred example, each spray configuration in the set of spray configurations is associated with a main spray extension having a component extending in a direction pointing away from the first surface of the heat exchanger. In this way, the water may be sprayed away from the first surface of the heat exchanger, and as a result, it may ensure sufficient time for the water droplets to evaporate in the air before reaching the heat exchanger. A technical benefit may include a lower risk of surface corrosion of the heat exchanger.

Optionally in some examples, including in at least one preferred example, each spray configuration in the set of spray configurations is associated with a main spray extension having a component extending in a direction pointing in a direction upstream the at least one nozzle, as seen in the intended direction of the flow of air received by the heat exchanger during use. In this way, the water may be sprayed into the air instead upstream the at least one nozzle, and as a result, it may ensure sufficient time for the water droplets to evaporate in the air before reaching the heat exchanger. A technical benefit may include a lower risk of surface corrosion of the heat exchanger.

Optionally in some examples, including in at least one preferred example, the water spraying arrangement further comprises at least one spray pipe on which the at least one nozzle is mounted, wherein the at least one spray pipe is controllable to rotate such that the main spray extension can be regulated. A technical benefit may include an improved water spray arrangement with a controllable spray angle. The spray angle may be controlled in a way, for example, to allow sufficient time for the water droplets to evaporate in the air before reaching the heat exchanger.

Optionally in some examples, including in at least one preferred example, the water spraying arrangement further comprises at least one spray pipe, wherein the at least one nozzle is rotatably mounted on the at least one spray pipe. In this way, the main spray extension may be controlled. A technical benefit may include an improved water spray arrangement with a controllable spray angle. The spray angle may be controlled in a way, for example, to allow sufficient time for the water droplets to evaporate in the air before reaching the heat exchanger.

Optionally in some examples, including in at least one preferred example, the at least one spray pipe is further controllable to adjust a distance between the at least one nozzle and the first surface of the heat exchange along the intended direction of the flow of air received by the heat exchanger during use. A technical benefit may include an improved water spray arrangement with a controllable spray distance. The spray distance may be controlled in a way, for example, to allow sufficient time for the water droplets to evaporate in the air before they reach the heat exchanger.

Optionally in some examples, including in at least one preferred example, the heat exchanger has a first extension along a first direction, a second extension along a second direction, and a third extension along a third direction, the first direction, second direction and third direction being perpendicular to each other, the first direction being the same direction to the intended direction of the flow of air received by the heat exchanger during use, wherein the first surface of the heat exchanger extends in the second direction and the third direction.

Optionally in some examples, including in at least one preferred example, the water spraying arrangement is such that when the cooling system is in a condition intended for use, the at least one nozzle is located at a position below at least a majority of the flow of air passing the nozzle during use. In other words, the least one nozzle may be positioned beneath the airflow, at least below the majority of the airflow, such as 90% of the airflow. This may imply that the water is sprayed from the nozzles and is directed upwards into the airflow. In this way, it may ensure sufficient time for the water droplets to stay in the air, and thereby to evaporate in the air before reaching the heat exchanger. A technical benefit may include a lower risk of surface corrosion of the heat exchanger.

Optionally in some examples, including in at least one preferred example, the water spraying arrangement comprises a first set of nozzles and a second set of nozzles, wherein the water spraying arrangement is such that when the cooling system is in an condition intended for use, the first set of nozzles located at a position below at least a majority of the flow of air passing the nozzle during use, and the second set of nozzle located at a position above at least a majority of the flow of air passing the nozzle during use. In this way, the first set of nozzles may be positioned beneath the airflow and the second set of nozzles may be positioned above the airflow, allowing a broader dispersion of the water.

Optionally in some examples, including in at least one preferred example, the cooling system further comprises an air compressor configured to pressurize air before it is delivered to the at least one nozzle. Purely by way of example, the air may be pressurized to 4-6 bars before it is delivered to the at least one nozzle. By pressurizing the air to an appropriate level and delivering the pressurized air to the at least one nozzle, it may be possible to create the micro-sized droplets that form a dry fog.

Optionally in some examples, including in at least one preferred example, the cooling system further comprises a water pump configured to pressurize the water before it is delivered to the water atomization device. Purely by way of example, the water may be pressurized to 4-6 bars before it is delivered to the at least one nozzle. By pressurizing the water to an appropriate level and delivering the pressurized water to the at least one nozzle, it may be possible to create the micro-sized droplets that form a dry fog.

Optionally in some examples, including in at least one preferred example, the cooling system comprises a control unit adapted to receive information indicative of at least one of the following:
- an air flow upstream the heat exchanger;
- a humidity level of the air upstream the heat exchanger, and
- a temperature of the air upstream of the heat exchanger,
the control unit being adapted to issue a signal to water spraying arrangement in response to the information, preferably the signal being indicative of which spray configuration the water spraying arrangement should assume. A technical benefit may include an improved water spray arrangement where spray configuration is controllable in relation to the above parameters. The spray configuration may be controlled in a way, for example, to allow sufficient time for the water droplets to evaporate in the air before reaching the heat exchanger. Purely by way of example, information indicative of the air flow upstream the heat exchanger may be information indicative of an air mass flow (e.g. expressed in terms of kg/s) upstream the heat exchanger, alternatively indicative of an air volume flow (e.g. expressed in terms of m³/s) upstream the heat exchanger.

According to a second aspect of the disclosure, a fuel cell cooling system is provided. The fuel cell cooling system comprises a fuel cell stack and a cooling system according to the first aspect of the present disclosure. The cooling system is adapted to cool the fuel cell stack. Advantages and technical benefits of the second aspect of the disclosure are largely analogous to the advantages and technical benefits of the first aspect of the disclosure.

Optionally in some examples, including in at least one preferred example, the water storage is in fluid communication with the fuel cell stack and configured to store the water expelled from the fuel cell stack.

According to a third aspect of the disclosure, a fuel cell system comprising the fuel cell cooling system according to the second aspect of the present disclosure is provided.

According to a fourth aspect of the disclosure, a vehicle comprising the fuel cell system according to the third aspect of the present disclosure is provided.

According to a fifth aspect of the disclosure, a computer-implemented method for operating the cooling system according to the first aspect of the present disclosure is provided. The method comprises:
- receiving, by processing circuitry of a computer system, information indicative of at least one of the following: an air flow upstream the heat exchanger, a humidity level of the air upstream the heat exchanger, and/or a temperature of the air upstream the heat exchanger,
- controlling, by the processing circuitry, the water spraying arrangement to assume the each one of a set of spray configurations in response to the received information.

The fifth aspect of the disclosure may seek to reduce the risk of potential corrosion on the heat exchanger's surface. A technical benefit may include an improved cooling system with enhanced service life. By controlling the water spraying arrangement on the basis of the above parameters, it may be possible to assume a spray configuration which may allow sufficient time for the water droplets to evaporate in the air before reaching the heat exchanger.

Optionally in some examples, including in at least one preferred example, the method further comprises: receiving, by the processing circuitry, a signal indicative of which spray configuration said water spraying arrangement should assume in response to the received information.

Optionally in some examples, including in at least one preferred example, the signal is caused by the processing circuitry to indicate increasing the angle between the main spray extension direction and the intended direction of the flow of air received by the heat exchanger during use and/or to increase a distance between the at least one nozzle and the first surface of the heat exchanger along the intended direction of the flow of air received by the heat exchanger during use in response to one of the following:
- an increased air flow upstream the heat exchanger,
- an increased humidity level upstream the heat exchanger,
- a decreased temperature upstream the heat exchanger.

According to a sixth aspect of the disclosure, a computer program product is provided. The computer program comprises program code for performing, when executed by the processing circuitry, the method according to the fifth aspect of the present disclosure.

According to a seventh aspect of the disclosure, a non-transitory computer-readable storage medium is provided. The non-transitory computer-readable storage medium comprises instructions, which when executed by the processing circuitry, cause the processing circuitry to perform the method according to the fifth aspect of the present disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of a vehicle according to an example;
**FIG. 2** is a schematic view of a cooling system;
**FIG. 3** shows a dry fog in comparison with larger water droplets;
**FIG. 4a and FIG. 4b** show side views of a water spraying arrangement;
**FIGS** shows a front view of another water spraying arrangement;
**FIG** 6 is a flow chart illustrating a method of operating a cooling system, and
**FIG. 7** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

Evaporative cooling is a known solution which utilizes water evaporation to enhance cooling effects. Various evaporative cooling concepts have been developed in recent years. One of the concepts involves using high-pressure nozzles to inject water sprays into a heat exchanger's surface to achieve the cooling effect. However, this method may cause a potential risk of corrosion on the heat exchanger's surface due to water accumulation. Moreover, the accumulated water may mix with particles contained in the air which may result in clogging of the heat exchanger. Furthremore, it may be difficult to achieve a good water distribution over the heat exchanger's surface which may impact the efficiency of the evaporation process. As such, there is still a strive to develop improved technology relating to evaporative cooling.
The present disclosure may seek to reduce the potential risk of corrosion on the heat exchanger's surface. A technical benefit may include an improved cooling system with enhanced service life.

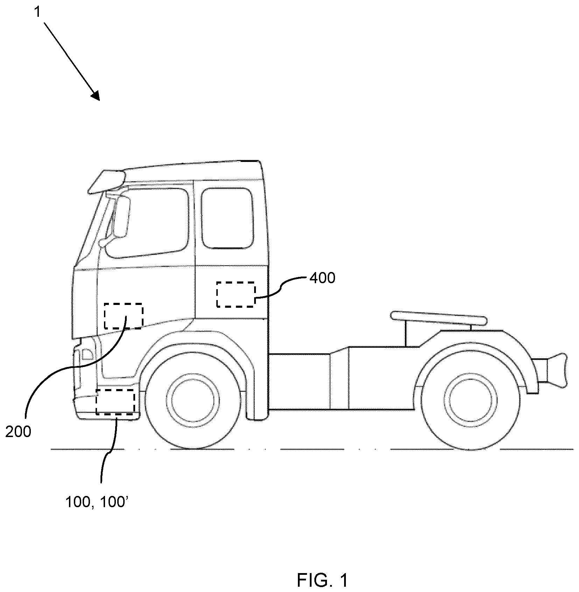

**Fig. 1** depicts a side view of a vehicle 1 according to an example. The vehicle 1 is here a truck, more specifically a heavy-duty truck for towing one or more trailers (not shown). Even though a heavy-duty truck 1 is shown it shall be noted that the disclosure is not limited to this type of vehicle but may be applicable for any other type of vehicle, such as a bus, construction equipment, e.g. a wheel loader or an excavator, and a passenger car. The disclosure is also applicable for other applications in which a cooling system is utilized, e.g., in stationary applications such as backup power generation systems, or in marine vessels.

The vehicle 1 may comprise a fuel cell system 200 according to an example. The fuel cell system 200 is here used for powering one or more electric motors (not shown) which are used for creating a propulsion force to the vehicle 1. The fuel cell system 200 may additionally or alternatively be used for powering other electric power consumers of the vehicle 1, such as an electric motor for a refrigerator system, an electric motor for an air conditioning system or any other electric power consuming function of the vehicle 1. The electric power produced by the fuel cell system 200 may also be used to charge high-voltage batteries of the energy storage system (not shown). Power stored in the high-voltage energy storage system may further be fed to the one or more electric motors.

The fuel cell system 200 comprises a fuel cell stack 110, which in turn comprises a plurality of fuel cells, such as several hundreds of fuel cells, which convert chemical energy of a fuel, typically hydrogen, and an oxidizing agent, typically oxygen, into electricity through chemical reactions. The chemical reactions may occur at high temperatures, and typically produce water as a by-product. The vehicle 1 further comprises a cooling system 100, such as a fuel cell cooling system 100', configured to cool various components within the fuel cell system 200.

The vehicle 1 further may comprise a control unit 400 according to an example of the invention. The control unit 400 may be used for controlling the cooling system 100. Even though an on-board control unit 400 is shown, it shall be understood that the control unit 400 could also be a remote control unit 400, i.e., an off-board control unit, or a combination of an on-board and off-board control unit. The control unit 400 may be configured to control the cooling system 100 by issuing control signals.

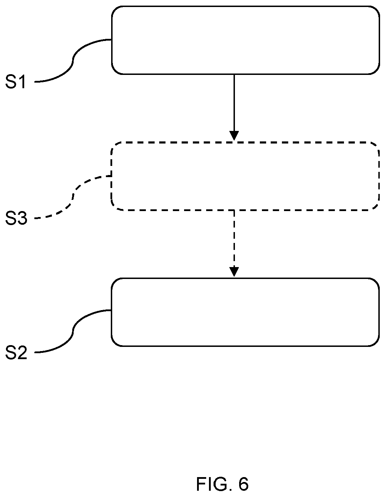

The control unit 400 is an electronic control unit and may comprise processing circuitry 402, see e.g. **Fig. 6**, which is adapted to run a computer program as disclosed herein. The control unit 400 may comprise hardware and/or software for performing the method according to the present disclosure. In an example the control unit 400 may be denoted a computer. The control unit 400 may be constituted by one or more separate sub-control units. In addition, the control unit 400 may communicate by use of wired and/or wireless communication means.

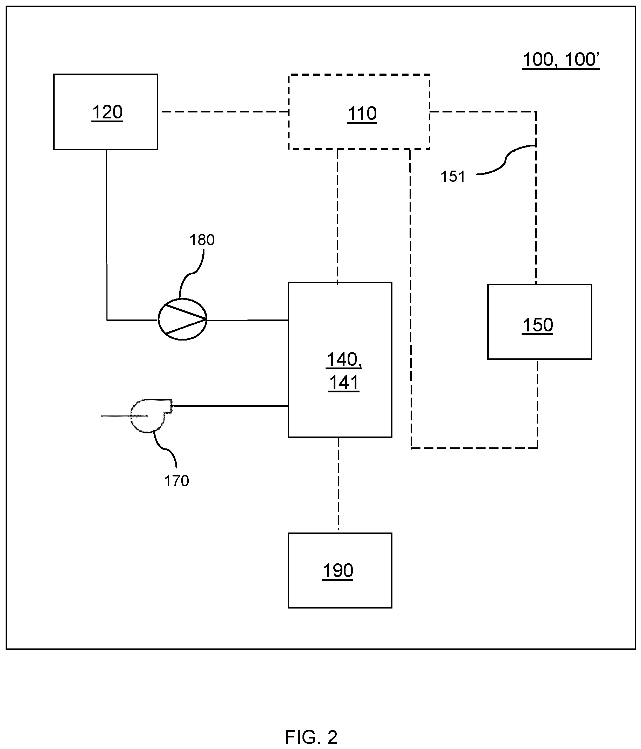

**Fig. 2** is a schematic illustration of a cooling system 100 according to an example. The cooling system 100 may be used to cool various components within a fuel cell system 200, such as the fuel cell system illustrated in the vehicle 1 as shown in **Fig. 1****.** In this example, the cooling system 100 also refers to a fuel cell cooling system 100'.

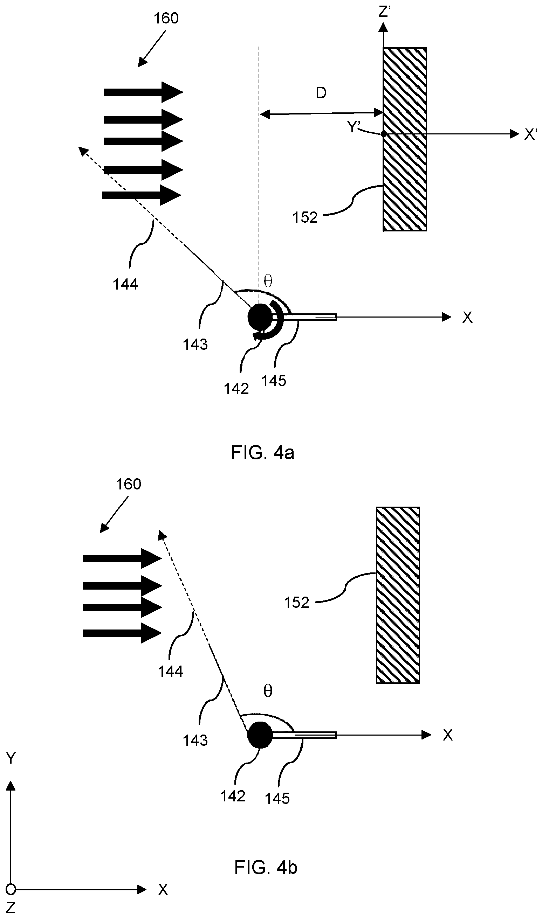

As illustrated in **FIG.2**, the cooling system 100 comprises a water storage 120 for storing water. In some examples, the water may be collected from the fuel cell system 200 during operation. The cooling system 100 further comprises a cooling circuit 151 adapted to circulate a coolant. The coolant may be used to cool various components within fuel cell system 200, for instance, the fuel cell stack 110. The cooling circuit 151 may be formed as a loop and may comprise a heat exchanger 150 adapted to receive a flow of air 160 during use, see e.g. **FIG. 4a** and **FIG. 4b**. The heat exchangers 150 may exchange heat between the received air and the coolant passing through it.

The cooling system 100 further comprises a water spraying arrangement 140 which is in fluid communication with the water storage 120 and is configured to spray atomized water into air 160 upstream a first surface 152 of the heat exchanger 150, as seen in an intended direction X of the flow of air 160 received by the heat exchanger 150 during use. More specifically, the water spraying arrangement 140 comprises a water atomization device 141 comprising at least one nozzle 142, as illustrated in **FIG. 4a** and **FIG. 4b**, through which water is mixed with pressurized air, such that the water is atomized to micro-sized droplets that form a dry fog and sprayed in a spray plume 143 from the nozzle 142, whereby the spray plume 143 has a main spray extension direction 144.

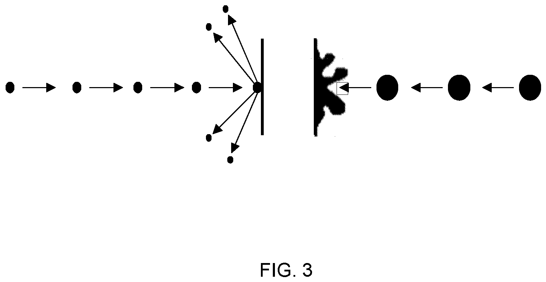

The at least one nozzle 142 may be any suitable nozzle that can create micro-sized droplets, preferably with a diameter that is less than 10 microns, which will form the dry fog. These nozzles are generally known from the prior art, such as the nozzle apparatus described in JP2011098285 A2. The JP2011098285 nozzle apparatus has a micritization chamber attached to an outlet of the nozzle. When gas and a liquid are supplied to the nozzle's injecting portion at predetermined pressures, fine gas-liquid particles are generated and injected into the micritization chamber, in which a dry fog is formed with an average particle size less than 6 microns, preferably in a range between 1.0 micro and 4.0 micro. As micritization chambers for particle size reduction is well-known technology, it will not be discussed in detail in the present disclosure. Unlike water droplets with larger sizes, which may burst upon contact with a heat exchanger's surface, potentially causing wetting and subsequent oxidation or corrosion concerns, these dry fog droplets may exhibit a bouncing behavior upon interaction with surfaces, e.g., bounce off from the surfaces, leading to a lower risk of surface corrosion of the heat exchanger. **FIG. 3** illustrates a comparison of the behavior between the dry fog (left part) and larger water droplets (right part).

Moreover, and again with reference to **FIG. 4a** and **FIG. 4b**, the water spraying arrangement 140 is adapted to assume each one of a set of spray configurations, the set of spray configurations comprising at least two spray configurations, wherein a spray configuration parameter of each spray configuration in the set of spray configurations is different from the corresponding spray configuration parameter of each other spray configuration in the set of spray configurations, the spray configuration parameter being indicative of at least one of the following:
∘ an angle θ, see each one of **FIG. 4a** and **FIG. 4b****,** between the main spray extension direction 144 and the intended direction X of the flow of air 160 received by the heat exchanger 150 during use, and
∘ a distance D, see **FIG. 4a****,** between the at least one nozzle 142 and the first surface 152 of the heat exchanger 150 along the intended direction X of the flow of air 160 received by the heat exchanger 150 during use.
Purely by way of example, **FIG. 4a** and **FIG. 4b** show two different spray configurations. Further details of the **FIG. 4a** and **FIG. 4b** examples will be discussed in detail in the subsequent paragraphs.

As shown in **FIG. 4a and FIG. 4b**, the water spraying arrangement 140 may further comprise at least one spray pipe 145 on which the nozzle 142 is mounted. The spray pipe 145 is controllable to rotate such that the main spray extension 144 can be regulated. The spray pipe 145 may for instance, be connected to a rotating motor (not shown) via a suitable coupling mechanism, such as flexible couplings or universal joints. Alternatively, or additionally, the nozzle 142 may be rotatably mounted on the at least one spray pipe 145, as indicated by the arrow in **Fig. 4a**. In this way, the angle θ between the main spray extension direction 144 and the intended direction X of the flow of air 160 received by the heat exchanger 150 during use can be regulated. Instead of, or in addition to, modifying the above-mentioned angle θ, the spray pipe 145 may be further controllable to adjust a distance D between the nozzle 142 and the first surface 152 of the heat exchange 150 along the intended direction X of the flow of air 160 received by the heat exchanger 150 during use. In these examples, the spray pipe 145 may have a telescopic structure configured for adjusting the distance D.

By regulating the angle θ and/or the distance D, various spray configurations may be achieved. In the shown examples, the spray configuration depicted in **FIG. 4a** has a larger angle θ compared to the spray configuration shown in **FIG. 4b**. This is due to the fact that the airflow in **FIG. 4a** is higher than that of **FIG. 4b**, which may require a longer time for the micro-sized droplets to evaporate in the air. By increasing the angle θ between the main spray extension direction 144 and the intended direction X of the flow of air 160 received by the heat exchanger 150 during use, it may allow sufficient time for the droplets to evaporate.

Moreover, as shown in the figures, each spray configuration in the set of spray configurations is associated with a main spray extension direction 144 having a component pointing away from the first surface 152 of the heat exchanger 150. Alternatively, or additionally, each spray configuration in the set of spray configurations is associated with a main spray extension direction 144 having a component extending in a direction upstream the nozzle 142, as seen in the intended direction X of the flow of air 160 received by the heat exchanger 150 during use. In this way, the water may be sprayed in a direction at least partially away from the first surface 152 of the heat exchanger 150, and as a result, it may ensure sufficient time for the water droplets to evaporate in the air before reaching the heat exchanger 150.

In some examples, as exemplified in **FIG. 4a**, the heat exchanger 150 may have a first extension along a first direction X', a second extension along a second direction Y', and a third extension along a third direction Z', the first direction, second direction and third direction being perpendicular to each other. The first direction X' may be the same direction to the intended direction X of the flow of air 160 received by the heat exchanger 150 during use, and the first surface 152 of the heat exchanger 150 extends in the second direction Y' and the third direction Z'.

In some examples, the cooling system 100 further comprises an air compressor 170 (see **Fig. 2**) configured to pressurize air before it is delivered to the at least one nozzle. Purely by way of example, the air may be pressurized to 4-6 bars before it is delivered to the at least one nozzle. Additionally, the cooling system may further comprise a water pump 180 (see **Fig. 2**) configured to pressurize the water before it is delivered to the at least one nozzle. Purely by way of example, the water may be pressurized to 4-6 bars before it is delivered to the at least one nozzle. By pressurizing the air and the water to an appropriate level and delivering them to the at least one nozzle 142, it may be possible to create the micro-sized droplets that form a dry fog.

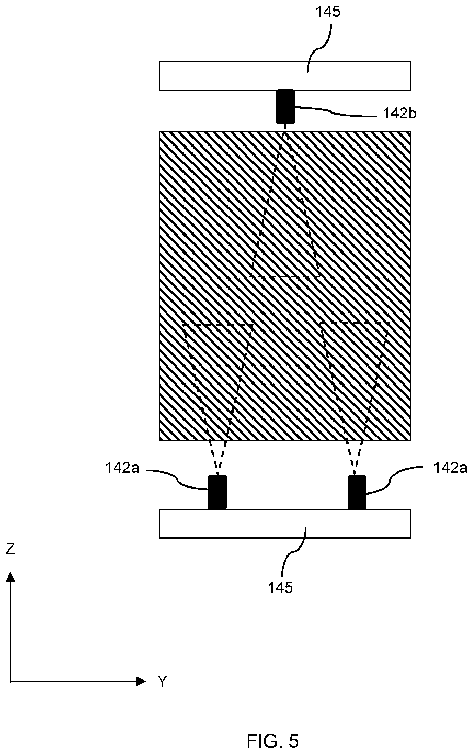

In some examples, as shown in **FIG. 5**, the water spraying arrangement 140 is such that when the cooling system 100 is in a condition intended for use, the at least one nozzle 142a is located at a position below at least a majority of the flow of air 160 passing the nozzle142a during use. In these examples, the nozzle 142a may be positioned beneath the airflow, at least below the majority of the airflow, such as at least 90% of the airflow. This may imply that the water is sprayed from the nozzles and is directed upwards into the airflow. In this way, it may ensure sufficient time for the water droplets to stay in the air, and thereby to evaporate in the air before reaching the heat exchanger. Additionally or alternatively, the water spraying arrangement 140 may comprise a first set of nozzles 142a and a second set of nozzles 142b, whereby the water spraying arrangement 140 is such that when the cooling system 100 is in an condition intended for use, the first set of nozzles 142a located at a position below at least a majority of the flow of air 160 passing the nozzle 142a during use, and the second set of nozzle 142b located at a position above at least a majority of the flow of air 160 passing the nozzle 142b during use. In this way, the first set of nozzles may be positioned beneath the airflow and the second set of nozzles may be positioned above the airflow, allowing a broader dispersion of the water.

In some examples, the cooling system 100 comprises a control unit 400, such as the control unit 400 of the vehicle 1 described in paragraphs 0042 - 0043. The control unit 400 is adapted to receive information indicative of at least one of the following:
- an air flow upstream the heat exchanger 150;
- a humidity level of the air 160 upstream the heat exchanger 150, and
- a temperature of the air 160 upstream of the heat exchanger 150.
The control unit 400 is adapted to issue a signal to the water spraying arrangement 140 in response to the information, preferably the signal being indicative of which spray configuration the water spraying arrangement 140 should assume.

Moreover, the above presentation of cooling system 100 may be used in a fuel cell system, such as the fuel cell system 200 of the vehicle 1. Hence, the present disclosure also relates to a fuel cell cooling system 100' that comprises a fuel cell stack 110, and the cooling system 100, whereby the cooling system 100 is adapted to cool the fuel cell stack 110. In these examples, the water storage 120 is in fluid communication with the fuel cell stack 110 and configured to store the water expelled from the fuel cell stack 110 during operation.

**FIG. 6** is a flowchart illustrating an exemplary method for operating the cooling system 100. The method may be applied to any type of cooling systems, e.g., the cooling system in a fuel cell system 200 shown in **Fig. 1**. The method may be performed by a control system 100 of the vehicle 1. The method comprises the steps listed in the following, which, unless otherwise indicated, may be taken in any suitable order.

**S1:** receiving, by processing circuitry of a computer system 400, information indicative of at least one of the following: an air flow upstream the heat exchanger 150, a humidity level of the air 160 upstream the heat exchanger 150, and a temperature of the air 160 upstream the heat exchanger 150, and

**S2:** controlling, by the processing circuitry, the water spraying arrangement 140 to assume the each one of a set of spray configurations in response to the received information.

In some examples, the method further comprises an option step **S3**: receiving, by the processing circuitry, a signal indicative of which spray configuration the water spraying arrangement 140 should assume in response to the received information.

In these examples, the signal is caused, by the processing circuitry, to indicate increasing the angle θ between the main spray extension direction 144 and the intended direction X of the flow of air 160 received by the heat exchanger 150 during use and/or to increase a distance D between the at least one nozzle 142, 142a, 142b and the first surface 152 of the heat exchanger 150 along the intended direction X of the flow of air 160 received by the heat exchanger 150 during use in response to one of the following:
- an increased air flow upstream the heat exchanger 150,
- an increased humidity level upstream the heat exchanger 150,
- a decreased temperature upstream the heat exchanger 150.

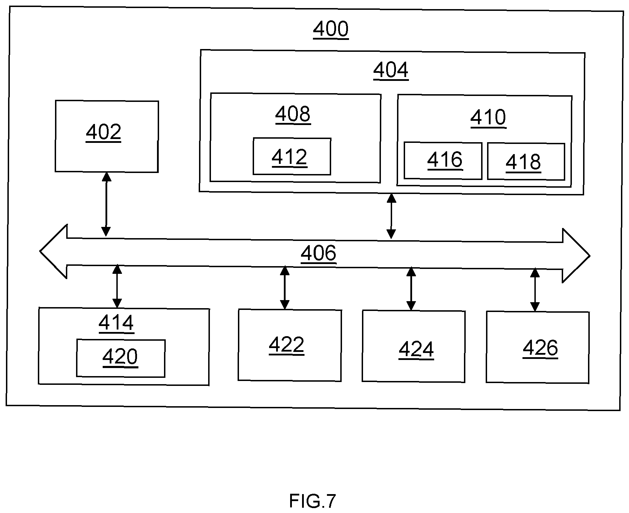

**Fig 7****.** illustrates a computer system 400, which may be seen as the control unit 400 of the vehicle 1 and/or the fuel cell system 110. The computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets) of instructions to perform any one or more of the methodologies discussed herein. Accordingly, any reference in the disclosure and/or claims to a computer system, computing system, computer device, computing device, control system, control unit, electronic control unit ECU), processor device, processing circuitry, etc., includes reference to one or more such devices to individually or jointly execute a set or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN) bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor DSP), an Application Specific Integrated Circuit ASIC), a Field Programmable Gate Array FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM), electrically erasable programmable read-only memory EEPROM), etc.), and volatile memory **410** e.g., random-access memory RAM)), or any other medium which can be used to carry or store desired program code in the form of machine-executable instructions or data structures and which can be accessed by a computer or other machine with processing circuitry **402**. A basic input/output system BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive HDD) e.g., enhanced integrated drive electronics EIDE) or serial advanced technology attachment SATA)), HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules) can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium e.g., single medium or multiple media), such as the storage device **414**, which includes complex programming instructions e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product e.g., readable storage medium) storing the computer program **420** thereon, where at least a portion of a computer program **420** may be loadable e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE) 1394 serial port, a Universal Serial Bus USB) port, an IR interface, and the like. The computer system **400** may include an output device interface **424** configured to forward output, such as to a display, a video display unit e.g., a liquid crystal display LCD) or a cathode ray tube CRT)). The computer system **400** may include a communications interface **426** suitable for communicating with a network as appropriate or desired.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples and combination of examples.

Example 1: A cooling system (100) comprising:
- a water storage (120) for storing water,
- a cooling circuit (151) adapted to circulate a coolant, said cooling circuit (151) comprising a heat exchanger (150) adapted to receive a flow of air (160) during use, and
- a water spraying arrangement (140) in fluid communication with the water storage (120) and configured to spray atomized water into air (160) upstream a first surface (152) of the heat exchanger (150), as seen in an intended direction (X) of the flow of air (160) received by said heat exchanger (150) during use,
- wherein the water spraying arrangement (140) comprises a water atomization device (141) comprising at least one nozzle (142, 142a, 142b) through which water is mixed with pressurized air, such that the water is atomized to micro-sized droplets that form a dry fog and sprayed in a spray plume (143) from said nozzle (142, 142a, 142b), said spray plume (143) having a main spray extension direction (144),
- wherein the water spraying arrangement (140) is adapted to assume each one of a set of spray configurations, said set of spray configurations comprising at least two spray configurations, wherein a spray configuration parameter of each spray configuration in said set of spray configurations is different from the corresponding spray configuration parameter of each other spray configuration in said set of spray configurations, said spray configuration parameter being indicative of at least one of the following:
   ∘ an angle (θ) between said main spray extension direction (144) and the intended direction (X) of the flow of air (160) received by said heat exchanger (150) during use, and
   ∘ a distance (D) between the at least one nozzle (142, 142a, 142b) and the first surface (152) of the heat exchanger (150) along the intended direction (X) of the flow of air (160) received by said heat exchanger (150) during use.

Example 2: The cooling system (100) according to Example 1, wherein diameter of the micro-sized droplets is less than 10 microns.

Example 3: The cooling system (100) according to any one of the preceding Examples, wherein each spray configuration in said set of spray configurations is associated with a main spray extension having a component extending in a direction (144) pointing away from the first surface (152) of the heat exchanger (150).

Example 4: The cooling system (100) according to any one of the preceding Examples, wherein each spray configuration in said set of spray configurations is associated with a main spray extension having a component extending in a direction (144) pointing in a direction upstream said at least one nozzle (142, 142a, 142b), as seen in the intended direction (X) of the flow of air (160) received by said heat exchanger (150) during use.

Example 5: The cooling system (100) according to any one of the preceding Examples, wherein the water spraying arrangement (140) further comprises at least one spray pipe (145) on which the at least one nozzle (142, 142a, 142b) is mounted, wherein the at least one spray pipe (145) is controllable to rotate such that the main spray extension (144) can be regulated.

Example 6: The cooling system (100) according to any one of Examples 1-5, wherein the water spraying arrangement (140) further comprises at least one spray pipe (145), wherein the at least one nozzle (142, 142a, 142b) is rotatably mounted on the at least one spray pipe (145).

Example 7: The cooling system (100) according to any one of Examples 5-6, wherein the at least one spray pipe (145) is further controllable to adjust a distance (D) between the at least one nozzle (142, 142a, 142b) and the first surface (152) of the heat exchange (150) along the intended direction (X) of the flow of air (160) received by said heat exchanger (150) during use.

Example 8: The cooling system (100) according to any one of the preceding Examples, wherein the heat exchanger (150) has a first extension along a first direction (X'), a second extension along a second direction (Y'), and a third extension along a third direction (Z'), the first direction, second direction and third direction being perpendicular to each other, the first direction (X') being the same direction to the intended direction (X) of the flow of air (160) received by said heat exchanger (150) during use, wherein the first surface (152) of the heat exchanger (150) extends in the second direction (Y') and the third direction (Z').

Example 9: The cooling system (100) according to any one of the preceding Examples, wherein the water spraying arrangement (140) is such that when the cooling system (100) is in a condition intended for use, the at least one nozzle (142a) is located at a position below at least a majority of the flow of air (160) passing said nozzle(142a) during use.

Example 10: The cooling system (100) according to any one of Examples 1- 9, wherein the water spraying arrangement (140) comprises a first set of nozzles (142a) and a second set of nozzles (142b), wherein the water spraying arrangement (140) is such that when the cooling system (100) is in an condition intended for use, the first set of nozzles (142a) located at a position below at least a majority of the flow of air (160) passing said nozzle (142a) during use, and the second set of nozzle (142b) located at a position above at least a majority of the flow of air (160) passing said nozzle (142b) during use.

Example 11: The cooling system (100) according to any one of the preceding Examples, further comprising an air compressor (170) configured to pressurize air before it is delivered to the at least one nozzle.

Example 12: The cooling system (100) according to any one of the preceding Examples, further comprising a water pump (180) configured to pressurize the water before it is delivered to the at least one nozzle.

Example 13: The cooling system (100) according to any one of the preceding Examples, said cooling system (100) comprising a control unit (400) adapted to receive information indicative of at least one of the following:
- an air flow upstream the heat exchanger (150);
- a humidity level of the air (160) upstream the heat exchanger (150), and
- a temperature of the air (160) upstream of the heat exchanger (150),
said control unit (400) being adapted to issue a signal to said water spraying arrangement (140) in response to said information, preferably said signal being indicative of which spray configuration said water spraying arrangement (140) should assume.

Example 14: A fuel cell cooling system (100') comprising:
- a fuel cell stack (110), and
- a cooling system (100) according to any one of the preceding Examples, said cooling system (100) being adapted to cool said fuel cell stack (110).

Example 15: The fuel cell cooling system (100') according to Example 14, wherein the water storage (120) is in fluid communication with the fuel cell stack (110) and configured to store the water expelled from the fuel cell stack (110).

Example 16: A fuel cell system (200) comprising the fuel cell cooling system (100') according to Examples 14-15.

Example 17: A vehicle (1) comprising the fuel cell system (200) according to Example 16.

Example 18: A computer-implemented method for operating the cooling system (100) according to any one of Examples 1-13, comprising:
- receiving (S1), by processing circuitry of a computer system (400), information indicative of at least one of the following: an air flow upstream the heat exchanger (150), a humidity level of the air (160) upstream the heat exchanger (150), and a temperature of the air (160) upstream the heat exchanger (150),
- controlling (S2), by the processing circuitry, said water spraying arrangement (140) to assume the each one of a set of spray configurations in response to said received information,

Example 19: The method according to Example 18, further comprising:
- receiving (S3), by the processing circuitry, a signal indicative of which spray configuration said water spraying arrangement (140) should assume in response to said received information.

Example 20: The method according to Example 18 wherein the signal is caused, by the processing circuitry, to indicate increasing the angle (θ) between said main spray extension direction (144) and the intended direction (X) of the flow of air (160) received by said heat exchanger (150) during use and/or to increase a distance (D) between the at least one nozzle (142, 142a, 142b) and the first surface (152) of the heat exchanger (150) along the intended direction (X) of the flow of air (160) received by said heat exchanger (150) during use in response to one of the following:
- an increased air flow upstream the heat exchanger (150),
- an increased humidity level upstream the heat exchanger (150),
- a decreased temperature upstream the heat exchanger (150).

Example 21: A computer program product comprising program code for performing, when executed by the processing circuitry, the method of any of Examples 18-20.

Example 22: A non-transitory computer-readable storage medium comprising instructions, which when executed by the processing circuitry, cause the processing circuitry to perform the method of any of Examples 18-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cooling system (100) comprising:
- a water storage (120) for storing water,
- a cooling circuit (151) adapted to circulate a coolant, said cooling circuit (151) comprising a heat exchanger (150) adapted to receive a flow of air (160) during use, and
- a water spraying arrangement (140) in fluid communication with the water storage (120) and configured to spray atomized water into air (160) upstream a first surface (152) of the heat exchanger (150), as seen in an intended direction (X) of the flow of air (160) received by said heat exchanger (150) during use,
- wherein the water spraying arrangement (140) comprises a water atomization device (141) comprising at least one nozzle (142, 142a, 142b) through which water is mixed with pressurized air, such that the water is atomized to micro-sized droplets that form a dry fog and sprayed in a spray plume (143) from said nozzle (142, 142a, 142b), said spray plume (143) having a main spray extension direction (144),
- wherein the water spraying arrangement (140) is adapted to assume each one of a set of spray configurations, said set of spray configurations comprising at least two spray configurations, wherein a spray configuration parameter of each spray configuration in said set of spray configurations is different from the corresponding spray configuration parameter of each other spray configuration in said set of spray configurations, said spray configuration parameter being indicative of at least one of the following:
∘ an angle (θ) between said main spray extension direction (144) and the intended direction (X) of the flow of air (160) received by said heat exchanger (150) during use, and
∘ a distance (D) between the at least one nozzle (142, 142a, 142b) and the first surface (152) of the heat exchanger (150) along the intended direction (X) of the flow of air (160) received by said heat exchanger (150) during use.

2. The cooling system (100) according to claim 1, wherein diameter of the micro-sized droplets is less than 10 microns.

3. The cooling system (100) according to any one of the preceding claims, wherein each spray configuration in said set of spray configurations is associated with a main spray extension having a component extending in a direction (144) pointing away from the first surface (152) of the heat exchanger (150).

4. The cooling system (100) according to any one of the preceding claims, wherein each spray configuration in said set of spray configurations is associated with a main spray extension having a component extending in a direction (144) pointing in a direction upstream said at least one nozzle (142, 142a, 142b), as seen in the intended direction (X) of the flow of air (160) received by said heat exchanger (150) during use.

5. The cooling system (100) according to any one of the preceding claims, wherein the water spraying arrangement (140) further comprises at least one spray pipe (145) on which the at least one nozzle (142, 142a, 142b) is mounted, wherein the at least one spray pipe (145) is controllable to rotate such that the main spray extension (144) can be regulated.

6. The cooling system (100) according to any one of claims 1-5, wherein the water spraying arrangement (140) further comprises at least one spray pipe (145), wherein the at least one nozzle (142, 142a, 142b) is rotatably mounted on the at least one spray pipe (145).

7. The cooling system (100) according to any one of claims 5-6, wherein the at least one spray pipe (145) is further controllable to adjust a distance (D) between the at least one nozzle (142, 142a, 142b) and the first surface (152) of the heat exchange (150) along the intended direction (X) of the flow of air (160) received by said heat exchanger (150) during use.

8. The cooling system (100) according to any one of the preceding claims, said cooling system (100) comprising a control unit (400) adapted to receive information indicative of at least one of the following:
- an air flow upstream the heat exchanger (150);
- a humidity level of the air (160) upstream the heat exchanger (150), and
- a temperature of the air (160) upstream of the heat exchanger (150),
said control unit (400) being adapted to issue a signal to said water spraying arrangement (140) in response to said information, preferably said signal being indicative of which spray configuration said water spraying arrangement (140) should assume.

9. A fuel cell cooling system (100') comprising:
- a fuel cell stack (110), and
- a cooling system (100) according to any one of the preceding claims, said cooling system (100) being adapted to cool said fuel cell stack (110).

10. The fuel cell cooling system (100') according to claim 9, wherein the water storage (120) is in fluid communication with the fuel cell stack (110) and configured to store the water expelled from the fuel cell stack (110).

11. A fuel cell system (200) comprising the fuel cell cooling system (100') according to claims 9-10.

12. A vehicle (1) comprising the fuel cell system (200) according to claim 11.

13. A computer-implemented method for operating the cooling system (100) according to any one of claims 1-8, comprising:
- receiving (S1), by processing circuitry of a computer system (400), information indicative of at least one of the following: an air flow upstream the heat exchanger (150), a humidity level of the air (160) upstream the heat exchanger (150), and a temperature of the air (160) upstream the heat exchanger (150),
- controlling (S2), by the processing circuitry, said water spraying arrangement (140) to assume the each one of a set of spray configurations in response to said received information,

14. A computer program product comprising program code for performing, when executed by the processing circuitry, the method of any of claim 13.

15. A non-transitory computer-readable storage medium comprising instructions, which when executed by the processing circuitry, cause the processing circuitry to perform the method of any of claim 13.
